Europäisches Patentamt

European Patent Office

Office européen des brevets

(11) Publication number: **0 007 777**
A2

## (12) EUROPEAN PATENT APPLICATION

(21) Application number: **79301434.1**

(22) Date of filing: **19.07.79**

(51) Int. Cl.³: **A 23 C 9/12**
**A 47 J 41/00, B 29 D 27/04**
**B 65 D 81/38**

(30) Priority: **21.07.78 US 926686**

(43) Date of publication of application:
**06.02.80 Bulletin 80/3**

(84) Designated Contracting States:
**DE FR GB SE**

(71) Applicant: **Goetting, Thomas J.**
**75, Daggett Street**
**New Haven, Connecticut 06519(US)**

(72) Inventor: **Goetting, Thomas J.**
**75, Daggett Street**
**New Haven, Connecticut 06519(US)**

(74) Representative: **Leistikow, Frederick Walter**
**Rudolph et al,**
**BREWER & SON 5-9 Quality Court Chancery Lane**
**London WC2A 1HT(GB)**

(54) Incubating jacket and method of making cultured dairy foods.

(57) An incubating jacket is shown and described for cultures that incubate between about 40°F (4.4°C) and about 125°F (51.6°C). The incubating jacket is comprised of two shells of foam material, which shells are adapted to be fitted about common glass containers or other containers made from other non-heat-conductive materials. When the shells are fitted about such a container, the jacket will completely encase the container. The shells also each have a hard, plastic-like skin, which is preformed and wherein a foam-forming liquid resin is cured into the desired shape. Methods of incubating various cultures, such as yoghurt cultures, using such jacket are also described.

Fig.1A.

- 1 -

## INCUBATING JACKET AND METHOD
## FOR MAKING CULTURED DAIRY FOODS

### Disclosure

This invention pertains to an insulating jacket for containers made of glass or other non-heat-conductive materials which permit a constant and predetermined exchange of heat energy between the contents of the container enclosed by the insulating jacket and the environment in which such jacketed container is placed. More particularly, this invention relates to incubating jackets for the incubation of yoghurt culture in a hot, milk-containing fluid, wherein the mixture of culture and milk-containing fluid at elevated temperature is contained in a glass or other non-heat-conductive container about which the incubating jacket is fitted. A method of making such an incubating jacket is also described. The incubating jacket of the present invention is also useful for the incubation of other types of cultures in similar environments. The incubating jacket can also be adapted to maintain for extended periods of time the coolness of fluids in containers within the jacket, such as wine contained within a bottle enclosed by the incubating jacket.

### Brief Summary of the Drawing

Fig. 1A is a vertical, sectional view of the incubating jacket showing the constituent parts.

FIG. 1B is a perspective view of the incubating jacket.

FIG. 2 is a flowsheet showing the steps involved in a method of making an incubating jacket as disclosed in the present invention.

- 2 -

## Background

Yoghurt is a fermented, slightly acidic semi-fluid milk food made from milk to which cultures of bacteria have been added and allowed to incubate or develop. Such bacteria are Lactobacillus acidophilus, Lactobacillus Bulgaris and Streptococcus Thermophilus, which are commonly referred to as yoghurt culture. Yoghurt is commonly made by mixing yoghurt culture with milk that has been heated to a temperature of about 180°F to about 200°F, or scalded, and then allowed to cool to a temperature of about 110°F to about 145°F, and allowing such mixture to cool gradually over a period of about 3 hours to about 10 hours whereby the mixture remains at a temperature of between 90°F to about 120°F for a period of at least about 3 hours. The yoghurt culture within the hot milk environment employs the milk sugar, lactose, in its development. The culture converts the lactose to lactic acid, which lactic acid thickens the mixture to a custard-like consistency. As the culture incubates, it converts lactose to lactic acid, and gradually by using up the milk sugar, lactose, converts the milk to the more tart yoghurt. The tartness of a yoghurt product, accordingly, can be controlled by stopping the incubation of yoghurt culture within the hot milk environment, allowing an amount of milk sugar to remain in the yoghurt product. The scalding of the milk prior to the addition of the yoghurt culture kills all other bacteria present within the milk and allows the yoghurt culture to develop or incubate without impairment or competition for use of the lactose present. Other types of cultured dairy foods, such as sour cream, kefir, creme fraiche, buttermilk, cottage cheese, clotted cream and natto, are made by allowing different types of bacteria to incubate in a similar manner within a milk-containing environment.

A variety of yoghurt makers have been developed which will maintain the mixture of yoghurt culture and milk at the proper temperature for the time period needed to allow the yoghurt culture to incubate and convert the milk to yoghurt. Typically, such yoghurt makers are powered by electricity. The electricity permits or causes the yoghurt culture and milk mixture to be held at the necessary temperature, in the range of about 90°F to about 120°F, for indefinite periods of time without the necessity for extensive insulation or other means to retain heat. This constant source of heat energy made possible by the use of electricity can, however, if not regulated closely, cause the mixture of culture and milk to be heated indefinitely, causing the yoghurt to spoil and the mixture to separate into curds and whey.

Other non-electric yoghurt makers have also been developed. Such yoghurt makers essentially consist of insulated receptacles to hold containers of a hot milk and yoghurt culture mixture, which insulated receptacles will impede the loss of heat from the milk and yoghurt culture mixture. One such maker is described in U.S. Pat. No. 4,022,914, which issued to Moody. Moody showed an insulated, cyclindrical receptacle for holding a container of a mixture of milk and yoghurt culture, which mixture in its container is introduced to the insulated receptacle at a tempertaure of between about 120°F to about 145°F. The insulated receptacle allows the heat from the mixture of yoghurt culture and milk to dissipate gradually over a period of about 9 hours through the exterior surfaces of the receptacle, but not uniformly through such surfaces, producing at the end of such period a sweet yoghurt product. The temperature of the yoghurt culture and milk mixture at the end of approximately 9 to approximately 10 hours will be below about 90°F, or at a temperature at which the yoghurt culture will no longer incubate. Moody specifically teaches that the yoghurt, should be allowed to incubate in the described receptable at a temperature of between about 145°F to about 90°F for at least about 9 hours to produce a pleasant and sweet yoghurt product. The receptacle is also to be placed in surroundings at room temperatures of between 70°F to about 80°F. Additional incubation would produce a more acidic, and hence a more tart, yoghurt product.

Another non-electric, insulating-type yoghurt maker was disclosed by Savary in U.S. Pat. No. 2,052,253. Savary disclosed an insulating receptacle which will encase several individual containers holding a yoghurt culture and scalded milk mixture, which containers are introduced into the insulating receptacle when the mixtures they contain are at a temperature of about 120°F to about 125°F. The insulating receptacle described by Savary permits a constant and predetermined heat loss so as to allow the yoghurt culture to incubate within about 3 to about 4 hours, but, again, such heat loss is not uniform from the surfaces of the receptacle. The insulating receptacle shown by Savary consists essentially of a large, bell-shaped cover and a support upon which the lip of the bell-shaped cover would rest. Savary teaches that the general parabolic shape of the cover causes reflection of heat released from the warm mixture back onto the containers situated underneath such. Further, Savary teaches only that the inner wall of such cover is to be highly polished so as to aid in heat reflection. At the end of about 3 to about 4 hours, the mixture of milk and yoghurt culture placed within the receptacle described by Savary will be the temperature of the environment in which the receptacle is placed.

The inventor of the present application also developed an insulating-type yoghurt maker which consisted of two substantially identically shaped and sized polyurethane foam shells and a glass container about which such shells were adapted to be fitted. The inventor made and sold such yoghurt maker in the United States in 1974, 1975 and 1976.

- 5 -

## Summary Of The Invention

The incubating jacket of the present invention comprises two insulating shells of foam material, the exterior surface of which shells being covered by a hard, plastic-like skin.  The two shells are adapted to be closed about any conventional glass container, such as an one-quart mayonnaise jar, or any other conventional container made of similar non-heat-conductive material, and surround the entire outside surface of such container. It has been discovered that a uniform layer of foam material about one inch thick will cause adequate heat exchange for incubation of yoghurt and similar cultures.  In particular, it has been found that shells of polyurethane foam material are particularly effective.  The two shells completely surround such container, and nest with respect to one another at their lips in order to retain them in place when surrounding such container.  Furthermore, if the portion of the hard, plastic-like skin of the polyurethane foam shells immediately adjacent the polyurethane foam is highly polished, as to be heat-reflective, it has been found that this also provides for uniform heat loss.  In using the incubating jacket of the present invention to make a yoghurt product, a quantity of milk is initially heated to a scalding temp-erature, approximately $180^{o}F$ to approximately $200^{o}F$, which scalding will kill bacteria present within the mixture and generate a sterile, lactose-rich environment for the introduction of yoghurt culture.  The scalded milk is then cooled to a temperature of about $120^{o}F$, at which point it is placed within a glass jar or other container made of non-heat-conductive material.  A small amount of yoghurt culture is then introduced to and mixed well with the hot milk, and the container is sealed.  The container is then placed within one shell, the remaining shell then closing the assembly and causing the jacket to completely surround the container.  Due to the insulating action of the foam material, which can be further amplified by the reflective qualities of the jacket skin immediately adjacent the foam, the mixture of yoghurt culture and milk is held at an incubation temperature for extended periods of time. Typically, the mixture will be developed by the yoghurt culture in about 3 to 4 hours, at which point a yoghurt product is produced with both firm consistency and a sweet, pleasant taste. The jacket, however, has sufficient insulating properties to hold the mixture at a temperature of between about 120°F to about 90°F, for a period of up to about 12 hours, and, thusm can prolong incubation. Such prolonged incubation will cause further conversion of lactose to lactic acid and will, hence, produce a more tart yoghurt product. Incubation of approximately 8 hours is, however, considered the maximum desirable period of incubation for production of a sweet and pleasant yoghurt product.

An object of this invention is to control heat loss incurred in the manufacture of yoghurt and other cultured dairy food products without the need for electrical means for temperature control. The incubating jacket described in this invention saves energy in insulating a hot mixture of scalded milk and culture, and allowing the mixture to cool and form the cultured food product, the original heat dissipating therefrom and not requiring the additional expenditure of energy.

Another object of this invention is to produce yoghurt and other cultured foods of uniquely, mild flavour on a consistent basis. In that temperature and time are highly critical factors in determining the flavour of the cultured product, cultured dairy foods are easily over-cooked, producing bitter and rancid results. The natural heat loss produced by the incubating jacket is such that much of the culture development takes place slowly at temperatures that produce an exceptionally mild product. A container not as well insulated as a container surrounded by the incubating jacket of the present invention could result in only partial development, with a great amount of milk remaining uncultured.

Another important object of this invention is to provide a yoghurt maker that does not require close supervision of operation, but which produces a satisfactory product although neglected for long periods of time. The incubating jacket operates by itself, without electrical power, and maintains the needed incubation temperature without attention.

A further object of the present invention is to provide a method of making yoghurt and other cultured dairy foods which produces fully developed, but mild and low-acid, cultured dairy foods through natural heat loss, but which will neither "over-cook" the cultured foods nor require additional heat once culture is introduced to the hot or warm milk-containing environment.

An important object to this invention is to provide an incubating jacket that will produce an acceptable, mild-tasting cultured food product in any environment. The container encased by the incubating jacket of the present invention may be placed either at room temperature, or may be placed within a refrigerator which would have a temperature of about 35°F to about 40°F. Even though within such an environment, the incubating jacket provides for sufficient heat retention for the period of time needed for incubation.

Another object of this invention is to provide an incubating jacket that can make use of common glass containers. Most yoghurt makers require custom-fitted glass containers, or special containers of certain sizes and shape. The jacket disclosed by the present invention can be readily adapted to fit almost any common glass jar, such as the readily available one-quart size mayonnaise jar.

An important object of this invention is also to provide a dependable, safe and essentially fool-proof method of making cultured dairy foods. The cultured foods produced by use of this incubating jacket are of consistently fine and mild quality. Furthermore, the jacket promotes and causes an even and thorough distribution of heat within the mixture of culture and milk-containing fluid by providing uniform heat loss, and hence reduces the time necessary for incubation, for sweet yoghurt to approximately 3 or 4 hours, without also requiring a specific geometrical configuration for such jacket.

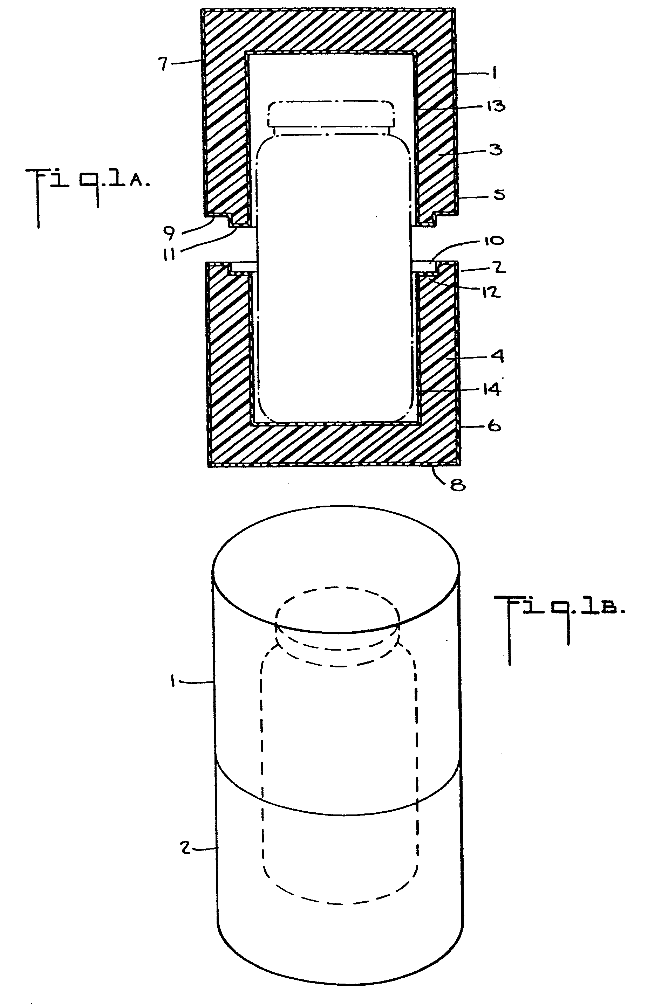

As shown in FIG. 1A, the incubating jacket consists of two shells 1 and 2, adapted to fit about a glass jar or similar container made for a non-heat-conductive material. Preferably, to cause maximum even heat distribution, such shells, should be cylindrical, or cup-shaped. Each shell 1 and 2 is made of foam material 3 and 4, having a hard skin of plastic-like material 5 and 6. Preferably, such foam material should be formed from a resin, such as polyurethane. Such plastic-like skin material 5 and 6 in those surfaces 7 and 8 of the skin 5 and 6 which are immediately adjacent foam material 5 and 6 are highly polished so as to promote heat reflection of heat dissipating from the mixture within the container surrounded by shells 1 and 2 of the incubating jacket back towards their said container. Shells 1 and 2 are adapted to nest with respect to one another at their lips 9 and 10 to retain them in place when surrounding a container. Preferably, when the shape of shells 1 and 2 is cylindrical, the nesting is achieved at lips 8 and 9 of shells 1 and 2, respectively, by lip 9 having projection 11 which fits into groove 12 on lip 10.

In a preferred embodiment, shells 1 and 2 will be cylindrical or cup-shaped, having skin 5 and 6 of high impact resin, such as polystyrene, which resin will render the incubating jacket virtually indestructible. With regard to the resin foam material 3 and 4, low-density, polyurethane foams manufactured by Olin Plastic's Specialty Urethane, Polysystem Code 7268-02. products 100B7603 and 7211A. have been found in particular to be effective. Surfaces 7 and 8 of skin 5 and 6 are highly polished, and to make such surfaces 7 and 8 more effective in reflecting heat energy, preferably such should be white. Furthermore, to increase the heat-retention capabilities of the incubating jacket, shells 1 and 2 can also have an internal skin 13 and 14 made of a hard, plastic-like material, preferably a resin such as polystyrene, which sandwiches and completely encases polyurethane foam material 5 and 6 between external skin 5 and 6 and internal skin 13 and 14.

FIG. 1B is a perspective view of the incubating jacket encasing a container, showing shells 1 and 2 nested with respect to each other and surrounding a common mayonnaise jar.

An incubating jacket as disclosed by the present invention to accommodate a commonly available one-quart mayonnaise glass jar would preferably consist of two, nearly identical cup-shaped shells which will form a cylinder when nested with respect to each other at their lips, such cylinder being approximately 6.1 inches in diameter and approximately 9.6 inches in height, each shell being approximately 4.8 inches in length from its lips to its closed end. The external skin of such shells would be made of a high impact polystyrene material approximately .05 inches to .06 inches thick. Immediately adjacent such skin would be approximately one inch of polyurethane foam material. As the shells are adapted to nest with respect to each other at their lips, the lip of one shell will have a slight projection in the polyurethane foam material to form a ring all round the lip, the other shell having a corresponding slight groove around its lip which can accommodate the projection of the aforesaid shell when the two shells are nested at the lips.

If a larger jar, larger than a common one-quart mayonnaise jar or tall bottle is to be jacketed, the shells' dimensions are merely altered. However, since most commonly available cylindrical containers are approximately 4 inches in diameter, or about the same diameter as the common one-quart mayonnaise jar, the above-described jacket can be readily adapted to accomodate a common container taller than the above-mentioned mayonnaise jar by use of collars. Such collars would consist essentially of open-ended cylinder sections of approximately 6.1 inches in diameter, and which are adapted to nest between the shells of the above-mentioned incubating jacket. The collars would have a thin, outer skin of a hard, plastic-like material of about .05 to .06 inches thick covering polyurethane foam material about one inch thick all around. One open end of such collar would have a groove in the polyurethane foam material, the other open end would have a projection, which groove and projection would accomodate the above-described projection of one shell and the above-described groove of the second shell, respectively. By use of such collars, tall cylindrical containers of approximately 4 inches in diameter can be readily accomodated by the above-described jacket simply by the addition of collars.

- 11 -

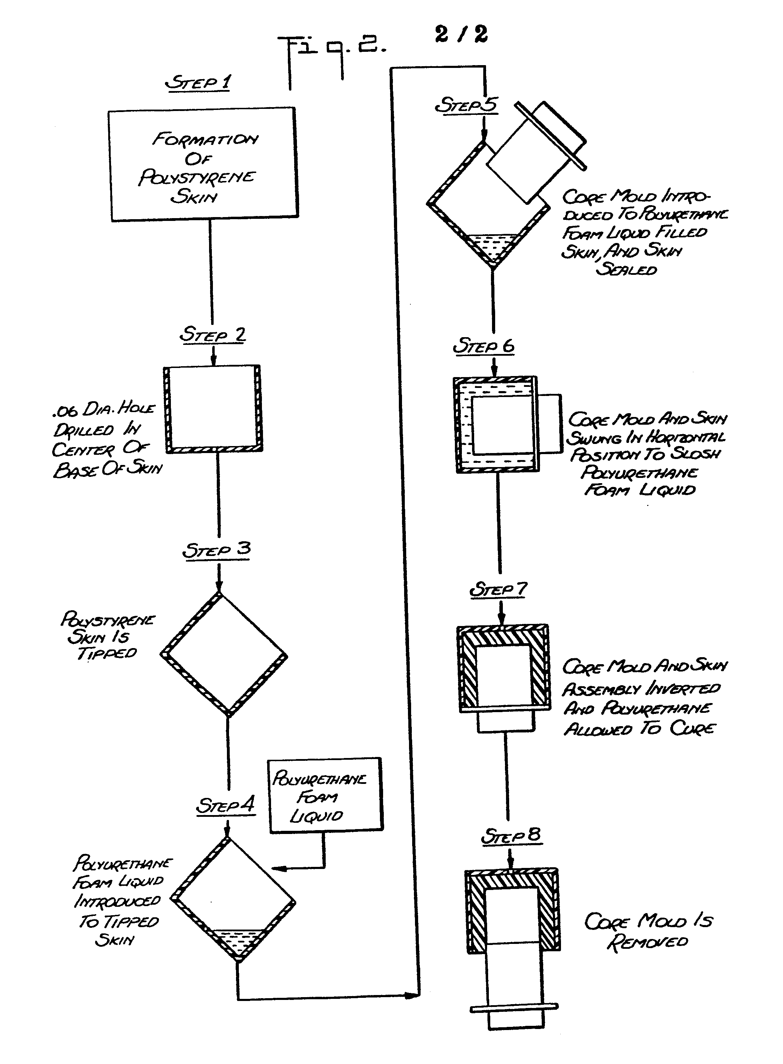

Incubating jackets as described in the present invention have been found to be readily and easily made by a method hereinbelow described. With reference to FIG. 2, a cup-like polystyrene skin is first formed in Step 1. The polystyrene skin so formed is then in Step 2 provided with a small hole, approximately .06 inches in diameter in the centre of the base of such skin, preferably by drilling. The skin is then tipped, Step 3, and filled with sufficient polyurethane foam liquid that will cure to form an uniform layer, at least one inch thick, of polyurethane foam all around the interior of the polystyrene skin, Step 4. The tipping of the skin helps to prevent escape of polyurethane foam liquid through the small hole in the base of the polystyrene skin. A core mold is then placed in the polystyrene cup which promotes distribution of the polyurethane foam liquid evenly and uniformly along the interior surface of the polystyrene skin, Step 5, the mold being clamped to the skin so as to seal the polyurethane foam liquid within the polystyrene skin. The polyurethane liquid is then sloshed about within the assembly in Step 6, preferably by swinging the assembly while such is horizontal. The assembly is then placed in an inverted position, the end of the polystyrene skin having the small hole facing up, Step 7, to allow the polyurethane foam material to cure, the small hole in the polyurethane skin providing ventilation for the polyurethane foam liquid which expands as it cures to form the foam, air bubbles rising to the inverted base of the polystyrene skin. After the polyurethane foam has cured, the core mold is removed, Step 8, and one shell of the incubating jacket of the present invention is produced. If a hard, polystyrene skin is also desired within the shell of the incubating jacket, then the core mold, before introduction to the polyurethane-foam-liquid-filled polystyrene skin, can be fitted with such, detachably affixing such a skin around the core mold, which will be introduced with the mold, but not removed with the mold upon curing of the polyurethane foam.

The following examples are illustrative of applications of the incubating jacket of the present invention, using the preferred embodiment of such jacket.

Example 1

The incubating jacket of the present invention is useful in maintaining the coolness of fluids placed within glass or similar non-heat-conductive containers surrounded by such jacket. When a quart of water at approximately $42^{\circ}F$ is placed within a common, one-quart glass mayonnaise jar, which glass jar is then jacketed by an incubating jacket according to the present invention, the jacket consisting of two, nearly cup-like shells approximately 6.1 inches in diameter and approximately 4.8 inches in height, having an outer polystyrene skin of approximately .05 inches in thickness, and said assembly is left for a period of hours at room temperature, that is, approximately $70^{\circ}F$ to approximately $80^{\circ}F$, the following heat exchange was observed:

| TEMP. OF WATER IN JAR INSIDE INCUBATING JACKET | TIME ELAPSED |
|---|---|
| $42^{\circ}F$ | 0 |
| $45^{\circ}F$ | 1 hr. |
| $47^{\circ}F$ | 2 hrs. |
| $48^{\circ}F$ | 3 hrs. |
| $50^{\circ}F$ | 4 hrs. |
| $51^{\circ}F$ | 5 hrs. |
| $53^{\circ}F$ | 6 hrs. |
| $54^{\circ}F$ | 7 hrs. |
| $55^{\circ}F$ | 8 hrs. |
| $56^{\circ}F$ | 9 hrs. |

- 13 -

| 57°F | 10 hrs. |
| 58°F | 11 hrs. |
| 59°F | 12 hrs. |

Example 2

Yoghurt can be made by use of the incubating jacket of the present invention by the following method, among others. Approximately one quart of milk is heated to scalding temperatures, approximately 180°F to approximately 200°F. The scalded milk is then allowed to cool to approximately 115°F to approximately 125°F. After such temperature is reached, one tablespoon of fresh yoghurt is placed into the scalded milk and thoroughly mixed therewith. Dried yoghurt culture may be used instead of the fresh yoghurt. The mixture of fresh yoghurt, which contains the required live bacteria, and scalded milk is then placed in a glass jar, which jar is then capped loosely. The jar is then surrounded by the incubating jacket of the present invention, the jar being inserted into one shell of such jacket, the remaining shell then being fitted over the exposed part of the jar, resulting in complete enclosure of the jar. The following heat loss was observed when an incubating jacket according to the present invention was used, which jacket consisted of two nearly identical, cup-like shells approximately 6.1 inches in diameter and approximately 4.8 inches in height, and had an outer polystyrene skin about .05 inches thick, the glass jar being the common one-quart mayonnaise jar, and the assembly was left at room temperature of approximately 70°F to approximately 80°F:

| TEMPERATURE OF MIXTURE IN JAR INSIDE INCUBATING JACKET | TIME ELAPSED |
| --- | --- |
| 120°F | 0 |

| | |
|---|---|
| 117°F | 1 hr. |
| 114°F | 2 hrs. |
| 112°F | 3 hrs. |
| 110°F | 4 hrs. |
| 108°F | 5 hrs. |
| 105°F | 6 hrs. |
| 102°F | 7 hrs. |
| 99°F | 8 hrs. |
| 96°F | 9 hrs. |
| 94°F | 10 hrs. |
| 94°F | 11 hrs. |
| 92°F | 12 hrs. |

The assembly should be undisturbed during the incubating period in order to avoid lumps or uneven development of the yoghurt culture. A sweet yoghurt product is produced after about 3 hours. For a more tart yoghurt, incubation should be allowed to proceed for about seven to about 8 hours. After about 12 hours, the temperature within the glass jar will drop below 90°F, or below the temperature needed for further incubation of the yoghurt culture.

If the above-described jacketed jar assembly is placed within a refrigerator, the interior of which is approximately 35°F to approximately 40°F, the following heat loss was observed:

| TEMPERATURE OF MIXTURE IN JAR INSIDE INCUBATING JACKET | TIME ELAPSED |
|---|---|
| 120°F | 0 |
| 117°F | 1 hr. |
| 110°F | 2 hrs. |
| 107°F | 3 hrs. |
| 101°F | 4 hrs. |
| 96°F | 5 hrs. |

- 15 -

| | |
|---|---|
| $92^{\circ}F$ | 6 hrs. |
| $89^{\circ}F$ | 7 hrs. |
| $85^{\circ}F$ | 8 hrs. |
| $80^{\circ}F$ | 9 hrs. |
| $80^{\circ}F$ | 10 hrs. |
| $76^{\circ}F$ | 11 hrs. |
| $74^{\circ}F$ | 12 hrs. |

Since yoghurt, once made, must be refrigerated, the incubating jacket of the present invention provides great convenience in that it will provide sufficient heat retention to allow incubation of yoghurt culture in a hot mixture contained within such jacket while the assembly is in a refrigerator for a time period necessary to develop the milk-containing fluid, which incubation will cease after the mixture has been incubated and developed for approximately 8 hours and the chilling of the yoghurt product will begin.

## Example 3

Buttermilk can be made by use of the incubating jacket described in the present invention. Approximately 3 2/3 cups of skim milk is mixed with approximately 1/3 cup of 1% acid buttermilk, which buttermilk should also be unpasturized after culturing. A pinch of salt is also mixed into the above-described skim milk and buttermilk mixture. The resulting mixture is then heated to about $90^{\circ}F$. The heated mixture is poured into a glass jar, which glass jar is then encased within the incubating jacket of the present invention. The assembly should be allowed to stand undisturbed for approximately 4 to approximately 5 hours. The following heat loss was observed when the assembly, having an incubating jacket consisting of two nearly identical, cup-like shells approximately 6.1 inches in diameter and approximately 4.8 inches in height, and having an outer polystyrene

- 16 -

skin about .05 inches thick, the glass jar being the common one-quart mayonnaise jar, was allowed to stand at room temperature of about $70^{O}F$ to about $80^{O}F$.

| TEMPERATURE OF MIXTURE IN JAR INSIDE INCUBATING JACKET | TIME ELAPSED |
|---|---|
| $90^{O}F$ | 0 |
| $88^{O}F$ | 1 hr. |
| $88^{O}F$ | 2 hrs. |
| $88^{O}F$ | 3 hrs. |
| $87^{O}F$ | 5 hrs. |
| $86^{O}F$ | 6 hrs. |

When the above-described assembly was allowed to stand in a refrigerator, the interior of which is about $35^{O}F$ to about $40^{O}F$, the following heat loss was observed:

| TEMPERATURE OF MIXTURE IN JAR INSIDE INCUBATING JACKET | TIME ELAPSED |
|---|---|
| $90^{O}F$ | 0 |
| $88^{O}F$ | 1 hr. |
| $86^{O}F$ | 2 hrs. |
| $84^{O}F$ | 3 hrs. |
| $80^{O}F$ | 4 hrs. |
| $80^{O}F$ | 5 hrs. |
| $75^{O}F$ | 6 hrs. |

## Example 4

Cottage cheese can be readily made by using the incubating jacket of the present invention. Approximately 4 tablespoons of buttermilk are mixed in about one quart of skim milk. The resulting mixture is then heated to about $90^{\circ}$F. The heated mixture is then placed within a glass jar, and the jar is then encased within the incubating jacket. Left standing undisturbed for approximately 14 hours, the mixture will clabber or curdle. At such point, the jacket is removed and the contents of the jar separated into curds and whey. The curds are cut into curds and whey. The curds are cut into squares, and the squares are then cut diagonally. The resulting curds are then heated in a double boiler to about $115^{\circ}$F. The hot curds are then held at that temperature for about 30 to about 40 minutes, at which point they are removed from the heat. The resultant curds are then drained on cheese cloth, spread over a collander. Rinsing of the drained curds with water will produce a less acid taste, if so desired, and milk or cream may also be added if desired.

When the cottage cheese precursor mixture is placed in a common, one-quart glass mayonnaise jar, which jar is then encased within an incubating jacket of the present invention consisting of two nearly identical cup-like shells approximately 6.1 inches in diameter and approximately 4.8. inches in height, and having an outer polystyrene skin about .05 inches thick the following heat loss was observed when the assembly was left standing at room temperature of about $70^{\circ}$F to about $80^{\circ}$F.

| TEMPERATURE OF MIXTURE IN JAR INSIDE INCUBATING JACKET | TIME ELAPSED |
|---|---|
| $90^{\circ}$F | 0 |
| $90^{\circ}$F | 1 hr. |
| $88^{\circ}$F | 2 hrs. |
| $88^{\circ}$F | 3 hrs. |
| $86^{\circ}$F | 4 hrs. |
| $83^{\circ}$F | 5 hrs. |

- 18 -

| 84°F | 6 hrs. |
|------|--------|
| 86°F | 7 hrs. |
| 85°F | 8 hrs. |
| 84°F | 9 hrs. |
| 83°F | 10 hrs. |
| 82°F | 11 hrs. |
| 81°F | 12 hrs. |
| 80°F | 13 hrs. |
| 80°F | 14 hrs. |

## Example 5

Sour cream can be made by use of the incubating jacket of the present invention. About 1/2 cup of buttermilk is mixed with about 3 1/2 cups of cream containing about 20% or greater butterfat. The mixture is heated to about 90°F. The heated mixture is then placed in a glass jar, which jar is then placed within the incubating jacket of the present invention. The assembly should be allowed to stand for approximately 24 hours without disturbance, at which point the jar and its contents should be removed from the incubating jacket and refrigerated. The following heat loss was observed when the assembly, having an incubating jacket consisting of two nearly identical, cup-like shells and having an outer polystyrene skin about .05 inches thick, the glass jar being the commonly available one-quart mayonnaise jar about 3.5 inches to 4 inches in diameter and about 6 inches or so high, was left standing at room temperature of about 70°F to about 80°F for 14 hours.

TEMPERATURE OF MIXTURE
IN JAR INSIDE INCUBATING

| JACKET | TIME ELAPSED |
|---|---|
| 90°F | 0 |
| 88°F | 1 hr. |
| 86°F | 2 hrs. |
| 85°F | 3 hrs. |
| 84°F | 4 hrs. |
| 84°F | 5 hrs. |
| 84°F | 6 hrs. |
| 84°F | 7 hrs. |
| 83°F | 8 hrs. |
| 82°F | 9 hrs. |
| 81°F | 10 hrs. |
| 81°F | 11 hrs. |
| 80°F | 12 hrs. |
| 80°F | 13 hrs. |
| 79°F | 14 hrs. |

## Example 6

Creme Fraiche can be made by using the incubating jacket of the present invention. Approximately 2 tablespoons of buttermilk is mixed together with about one quart of cream containing at least 30% butterfat. The mixture is then heated to about 90°F. The heated mixture is then placed in a glass jar, which is then encased in the incubating jacket. The assembly should be allowed to stand for about 6 hours, undisturbed. By using an incubating jacket of the present invention, which incubating jacket consists of two nearly identical, cup-like shells approximately 6.1 inches in diameter and approximately 4.8 inches in height, and having an outer polystyrene skin about .05 inches thick, and using a common one-quart glass mayonnaise jar, the following heat loss was observed when the assembly was placed in

- 20 -

surroundings having a temperature of about 70$^{O}$F to about 80$^{O}$F.

| TEMPERATURE OF MIXTURE IN JAR INSIDE INCUBATING JACKET | TIME ELAPSED |
|---|---|
| 90$^{O}$F | 0 |
| 88$^{O}$F | 1 hr. |
| 88$^{O}$F | 2 hrs. |
| 88$^{O}$F | 3 hrs. |
| 88$^{O}$F | 4 hrs. |
| 86$^{O}$F | 5 hrs. |
| 84$^{O}$F | 6 hrs. |

The incubating jacket of the present invention, thus, can accommodate and provide for the development of any culture that digests or develops between about 40$^{O}$F to about 120$^{O}$F for extended periods of time.

While preferred emobdiments of the invention have been described and illustrative examples of applications of the invention have been provided for the purpose of this disclosure, other modifications and variations may be made without departing from the spirit and scope of the invention.

- 1 -

CLAIMS

1. An incubating jacket for cultures that incubate between about 40°F and about 125°F characterised in that it comprises two shells of foam material having an external skin of hard, plastic-like material, the shells being adapted to be closed about a container so as to completely surround the container.

2. An incubating jacket as set forth in claim 1 characterised in that the two shells are of resin foam material.

3. An incubating jacket as set forth in claim 1 characterised in that the two shells are substantially of the same size and shape.

4. An incubating jacket as set forth in claim 1 characterised in that the external skin of the two shells is made of high impact resin material.

5. An incubating jacket as set forth in claim 1 and further characterised in that it comprises an internal skin of hard, plastic-like material for each of the two shells of foam material so as to sandwich and completely encase the foam material of said shells between the hard, plastic-like material of said outer skin and the hard, plastic-like material of the internal skin.

6. An incubating jacket as set forth in claim 5 characterised in that the internal skin of the two shells is made of high impact resin material.

7. A method of preparing sweet yoghurt without the addition of heating energy during incubation of yoghurt culture characterised in that it comprises:

a. heating milk to a temperature between 180°F to about 200°F or to scalding;

b. cooling said scalded milk to a temperature of about 115°F to about 125°F;

c. adding yoghurt culture to said cooled milk in said temperature range in an amount sufficient to develop said milk;

d. mixing said milk and yoghurt culture;

e. placing the resulting mixture of milk and yoghurt culture while in said temperature range within a receptacle having thermal properties that allow the mixture to decline in temperature from said temperature range to approximately 90°F at the end of about 8 to about 10 hours; and

f. incubating said mixture in said receptacle for a time not less than about 3 to about 4 hours and not more than about 8 to about 10 hours.

8. A method of preparing sweet yoghurt as set forth in claim 7 characterised in that the receptacle provides for uniform heat loss throughout its defining surfaces.

9. An incubating jacket for cultures that incubate between about 40°F and about 125°F characterised in that it comprises two shells of polyurethane foam material having an external skin of hard, plastic-like material, which external skin's surface immediately adjacent polyurethane foam material is highly polished so as to be heat reflective, the shells being adapted to be closed about a container so as to completely surround such container with at least about one inch of polyurethane foam material and to nest with respect to one another at said shell's lips.

10. An incubating jacket as set forth in claim 9 characterised in that the two shells are cup-shaped.

11. An incubating jacket as set forth in claim 9 characterised in that the two shells are substantially of the same size and shape.

12. An incubating jacket as set forth in claim 9 characterised in that the external skin of the two shells is made of high impact polystyrene, approximately .05 inches thick.

13. An incubating jacket as set forth in claim 9 further characterised in that it comprises an internal skin of hard, plastic-like material for each of the two shells of polyurethane foam material so as to sandwich and completely encase the polyurethane foam material of said shells between the hard, plastic-like material of said outer skin and the hard, plastic-like material of the internal skin.

14. An incubating jacket as set forth in claim 13 characterised in that the internal skin of the two shells is made of high impact polystyrene, approximately .05 inches thick.

15. A method of producing an incubating jacket characterised in that it comprises:

- 4 -

a.  forming a cup-shaped skin og high-impact resin;

b.  drilling a small hole into the base of said skin;

c.  tipping said skin to receive a liquid;

d.  introducing foam-forming resin liquid into said skin;

e.  introducing into said liquid-filled skin a core mold so as to seal said skin, the core mold being detachable affixed to the skin;

f.  sloshing the liquid in said sealed skin so as to evenly distribute the foam-forming resin liquid in said skin;

g.  inverting the skin so as to place the base having the small hole in an upwards position;

h.  curing the foam-forming resin liquid; and

i.  detaching the core mold from the skin.

Fig.1A.

Fig.1B.

0007777

Fig.2.    2/2

STEP 1

FORMATION
OF
POLYSTYRENE
SKIN

STEP 2

.06 DIA. HOLE
DRILLED IN
CENTER OF
BASE OF SKIN

STEP 3

POLYSTYRENE
SKIN IS
TIPPED

STEP 4

POLYURETHANE
FOAM
LIQUID

POLYURETHANE
FOAM LIQUID
INTRODUCED
TO TIPPED
SKIN

STEP 5

CORE MOLD INTRO-
DUCED TO POLYURETHANE
FOAM LIQUID FILLED
SKIN, AND SKIN
SEALED

STEP 6

CORE MOLD AND SKIN
SWUNG IN HORIZONTAL
POSITION TO SLOSH
POLYURETHANE
FOAM LIQUID

STEP 7

CORE MOLD AND SKIN
ASSEMBLY INVERTED
AND POLYURETHANE
ALLOWED TO CURE

STEP 8

CORE MOLD IS
REMOVED